Europäisches Patentamt

European Patent Office

Office européen des brevets

(11) Veröffentlichungsnummer: **0 413 227 A2**

# (12) EUROPÄISCHE PATENTANMELDUNG

(21) Anmeldenummer: 90115093.8

(22) Anmeldetag: 06.08.90

(51) Int. Cl.5: **B23B 27/14**

(30) Priorität: 18.08.89 DE 3927356

(43) Veröffentlichungstag der Anmeldung:
20.02.91 Patentblatt 91/08

(84) Benannte Vertragsstaaten:
CH DE ES FR GB IT LI LU SE

(71) Anmelder: INTERATOM Gesellschaft mit
beschränkter Haftung
Friedrich-Ebert-Strasse
D-5060 Bergisch-Gladbach 1(DE)

(72) Erfinder: Horn, Hans-Jürgen
Schmale Strasse 12
D-4330 Mülheim/Ruhr(DE)

(74) Vertreter: Fuchs, Franz-Josef, Dr.-Ing. et al
Postfach 22 13 17
D-8000 München 22(DE)

(54) Werkzeug für die zerspanende Bearbeitung mit Verschleissschutzschicht und nachträglich verrundeten Schneidkanten.

(57) Die vorliegende Erfindung betrifft ein Werkzeug für die zerspanende Bearbeitung von Metallteilen, wobei das Werkzeug (1) mindestens eine Schneidkante (2) aufweist und zumindest im Bereich der Schneidkante mit einer Verschleißschutzschicht (3) versehen ist. Erfindungsgemäß ist die Schneidkante (2) mit Verschleißschutzschicht (3) nachträglich verrundet, wobei die Schneidkante (2) ganz oder teilweise von der Verschleißschutzschicht (3) befreit sein kann, die jedoch in angrenzenden Bereichen erhalten bleibt. Durch das nachträgliche Verrunden lassen sich mittlere Krümmungsradien der Schneidkante (2) von 0,09 bis 0,1 mm und maximale Rauhtiefen von 0,5 bis 0,7 $\mu$ erreichen, wodurch die Standzeit solcher Werkzeuge gegenüber beispielsweise mit Titannitrid beschichteten, nicht nachträglich verrundeten Werkzeugen deutlich erhöht werden kann.

EP 0 413 227 A2

**WERKZEUG FÜR DIE ZERSPANENDE BEARBEITUNG MIT VERSCHLEISSSCHUTZSCHICHT UND NACH-TRÄGLICH VERRUNDETEN SCHNEIDKANTEN**

Die vorliegende Erfindung betrifft ein Werkzeug für die zerspanende Bearbeitung von Metallteilen, wobei das Werkzeug mindestens eine Schneidkante aufweist und zumindest im Bereich der Schneidkante mit einer Verschleißschutzschicht versehen ist. Werkzeuge für die zerspanende Bearbeitung sind in großer Vielfalt bekannt. Diese Werkzeuge weisen eine oder mehrere Schneidkanten auf, welche nach den jeweiligen Anforderungen geformt sind.

Um den Verschleiß von Fräsköpfen, Wendeplatten und dergleichen zu verringern, ist es außerdem üblich, solche Bauteile mit einer Verschleißschutzschicht zu versehen. Besonders zur Anwendung kommen Schutzschichten aus Titannitrid, welche gegen Abrieb besonders wiederstandsfähig sind.

Bekannt ist auch, daß es für die Qualität der Bearbeitung und die Lebensdauer des Werkzeuges vorteilhaft ist, die Schneidkante des Werkzeuges zu glätten und zu verrunden. Der Krümmungsradius der Verrundung kann dabei auf die späteren Parameter beim Einsatz der Schneidkante abgestimmt werden, um optimale Bedinungen zu erreichen. Hier können das zu bearbeitende Material, die Schnitt-Tiefe und die Schnitt-Geschwindigkeit berücksichtigt werden.

Bisher wurden daher die Schneidkanten von Werkzeugen zunächst verrundet und anschließend mit einer Verschleißschutzschicht, insb. Titannitrid, versehen. Es hat sich jedoch gezeigt, daß die aufgebrachte Verschleißschutzschicht wesentlich rauher als eine verrundete Schneidkante ist und auch der mittlere Krümmungsradius der beschichteten Schneidkante nicht immer präzise festgelegt werden kann. Da man jedoch glaubte, auf die Verschleißschutzschicht im Bereich der Schneidkante nicht verzichten zu können, wurden diese Nachteile in Kauf genommen, da die Verschleißschutzschicht insgesamt dennoch die Lebensdauer des Werkzeugs deutlich erhöhte.

Aufgabe der vorliegenden Erfindung ist es, ausgehend von diesem Stand der Technik, ein Werkzeug zu schaffen, welches bei der zerspanenden Bearbeitung von Metallteilen eine hohe Qualität der bearbeiteten Oberfläche und zusätzlich eine verlängerte Lebensdauer gegenüber Werkzeugen nach dem Stand der Technik aufweist. Die Angabe eines entsprechenden Verfahrens zum Herstellen eines solchen Werkzeuges ist ebenfalls Aufgabe der vorliegenden Erfindung.

Die erfindungsgemäße Lösung besteht darin, daß die Schneidkante mit Verschleißschutzschicht eines Werkzeugs nachträglich, d. h. nach dem Beschichten mit der Verschleißschutzschicht, verrundet ist. Diese zunächst abwegig erscheinende Vorgehensweise, die Schneidkante zuerst mit einer Schutzschicht zu versehen und diese anschließend zumindest teilweise beim Verrunden wieder abzutragen, hat sich bei Versuchen als ausgesprochen günstig erwiesen. Die zunächst rauhe und in ihrem Krümmungsradius nicht sehr präzise festgelegte Verschleißschutzschicht im Bereich der Schneidkante kann durch ein nachträgliches Verrunden wesentlich geglättet werden, wobei auch der gewünschte Krümmungsradius recht präzise festgelegt werden kann. Überraschenderweise erhöht sich auch dann der Verschleiß am Werkzeug nicht, wenn an der Schneidkante selbst die Verschleißschutzschicht bis auf das Grundmaterial abgetragen wird. Genaue Betrachtungen des Bearbeitungsvorganges zeigen, daß die Schneidkante selbst zwar hohem Druck, jedoch keinem großen Reibverschleiß ausgesetzt ist, da dieser hauptsächlich in den angrenzenden Bereichen, in denen das eigentliche Abrollen der Späne erfolgt, auftritt. Die nachträgliche Verrundung der Schneidkanten kann daher ohne Rücksicht darauf erfolgen, ob die Verschleißschutzschicht ganz oder teilweise abgetragen wird.

Durch das nachträgliche Verrunden der Schneidkanten werden diese gleichzeitig geglättet, wobei eine max. Rauhtiefe kleiner 1 $\mu$ erreicht werden soll. Mit max. Rauhtiefen im Bereich von 0,5 bis 0,7 $\mu$ konnte die Lebensdauer von Werkzeugen um teilweise mehr als 50 % gesteigert werden. Typische mittlere Krümmungsradien, die beim Verrunden hergestellt werden, liegen zwischen 0,03 und 0,12 mm, vorzugsweise im Bereich von 0,09 bis 0,1 mm.

Auch wenn die vorliegende Erfindung sich speziell auf Fräs-, Dreh- und Schneidwerkzeuge mit einer Titannitrid-Beschichtung bezieht, so ist sie doch nicht auf diese Anwendungsfälle beschränkt. Alle HSS-Werkzeuge oder HM-Werkzeuge können erfindungsgemäß nach dem Aufbringen beliebiger Verschleißschutzschichten nachträglich verrundet werden.

Dabei ist zu beachten, daß beim Herstellen eines solchen Werkzeuges für das Verrunden vorzugsweise besondere Bürsten eingesetzt werden sollten. Dabei eignen sich besonders Bürsten mit in Kunststofffäden, vorzugsweise aus Nylon, eingebettetem feinen Schleifpulver. Für das nachträgliche Verrunden der Schneidkanten von HSS-Werkzeugen hat sich als Schleifpulver Aluminiumoxid mit geringer Korngröße bewährt. Für HM-Werkzeuge kann als Schleifpulver Siliziumkarbid mit geringer Korngröße verwendet werden.

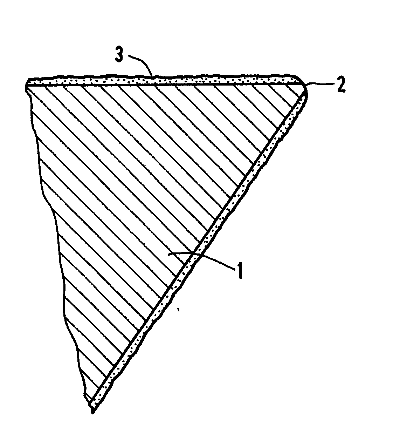

Ein Ausführungsbeispiel der Erfindung ist schematisch in der Zeichnung dargestellt. Die quer geschnittene Schneidkante 2 eines Werkzeuges 1 ist nachträglich verrundet und geglättet, wobei eine Verschleißschutzschicht 3 nachträglich zumindest teilweise im Bereich der Schneidkante 2 abgetragen, in den angrenzenden Bereichen aber erhalten ist.

Die Anwendung der vorliegenden Erfindung hat in Versuchen mit unterschiedlichen Werkzeugen und unter unterschiedlichen Bedingungen zu Standzeitverbesserungen zwischen 50 und 150 % gegenüber gleichen Werkzeugen ohne nachträgliche Schneidenverrundung geführt. Dies ist insbesondere bei der Bearbeitung von Turbinenwellen, Regelungsteilen, Turbinenschaufeln und ähnlichen Anwendungen, bei denen ein großes Zerspanungsvolumen zu bewältigen ist, von Vorteil.

**Ansprüche**

1. Werkzeug (1) für die zerspanende Bearbeitung von Metallteilen, wobei das Werkzeug (1) mindestens eine Schneidkante (2) aufweist und zumindest im Bereich der Schneidkante mit einer Verschleißschutzschicht (3) versehen ist, **dadurch gekennzeichnet**, daß die Schneidkante (2) mit Verschleißschutzschicht (3) nachträglich verrundet ist.

2. Werkzeug nach Anspruch 1, **dadurch gekennzeichnet**, daß die Schneidkante (2) eine maximale Rauhtiefe kleiner $1\mu$, vorzugsweise $0,5 - 0,7\ \mu$, und einen mittleren Krümmungsradius von 0,03 bis 0,12 mm aufweist, vorzugsweise 0,09 - 01 mm.

3. Werkzeug nach Anspruch 1 oder 2, **dadurch gekennzeichnet**, daß die Schneidkante (2) selbst durch das Verrunden ganz von der verschleißschutzschicht (3) befreit ist, diese jedoch in angrenzenden Bereichen erhalten ist.

4. Werkzeug nach Anspruch 1, 2 oder 3, **dadurch gekennzeichnet**, daß die Verschleißschutzschicht (3) aus Titannitrid und/oder Titankarbid besteht.

5. Werkzeug nach einen der vorhergehenden Ansprüche, **dadurch gekennzeichnet**, daß das Werkzeug (1) ein Fräswerkzeug ist.

6. Werkzeug nach Anspruch 1, 2, 3 oder 4, **dadurch gekennzeichnet**, daß das Werkzeug (1) eine Wendeplatte ist.

7. Verfahren zum Herstellen eines Werkzeuges (1) nach einem der vorhergehenden Ansprüche, **dadurch gekennzeichnet**, daß das Werkzeug (1) im Bereich der Schneidkunte(n) (2) mit einer Verschleißschutzschicht (3) beschichtet und anschließend die Schneidkante(n) (2) durch Bürsten verrundet werden.

8. Verfahren nach Anspruch 7, **dadurch gekennzeichnet**, daß zum Bürsten Scheiben mit in Kunststofffäden, vorzugsweise aus Nylon, eingebettetem feinem Schleifpulver verwendet werden.

9. Verfahren nach Anspruch 8, **dadurch gekennzeichnet**, daß als Schleifpulver für HSS-Werkzeuge Aluminiumoxidpulver mit geringer Korngröße verwendet wird.

10. Verfahren nach Anspruch 8, **dadurch gekennzeichnet**, daß als Schleifpulver für HM-Werkzeuge Siliziumkarbidpulver mit geringer Korngröße verwendet wird.